# EUROPEAN PATENT APPLICATION

(11) **EP 4 159 893 A1**
(43) Date of publication of application: **05.04.2023**
(21) Application number: 21762991.4
(22) Date of filing: 25.01.2021
(51) Int. Cl.: C25B 1/02, C01B 3/00, C25B 9/00, C25B 15/02, C25B 15/08, H01M 8/0662

(54) **HYDROGEN SYSTEM**

(30) Priority: 25.05.2020 JP 2020090449; 07.01.2021 JP 2021001726
(71) Applicant: Panasonic Intellectual Property Management Co., Ltd., Osaka-shi, Osaka 540-6207 (JP)
(72) Inventor: ONUMA, Shigenori, Chuo-ku, Osaka-shi, Osaka 540-6207 (JP)
(74) Representative: Grünecker Patent- und Rechtsanwälte PartG mbB
(86) International application number: PCT/JP2021/002517
(87) International publication number: WO 2021/240875

(57) **Abstract**

A hydrogen system includes a compressor that causes hydrogen in hydrogen-containing gas supplied to an anode to move to a cathode and produces compressed hydrogen by applying a voltage across the anode and the cathode disposed with an electrolyte membrane interposed therebetween; an anode gas supply channel through which the hydrogen-containing gas to be supplied to the anode flows; a recycle channel through which anode off-gas that is discharged from the anode and then merges with the anode gas supply channel flows; a drainage channel that is provided at a position of the recycle channel or at a position of the anode gas supply channel on the downstream side relative to a position at which the recycle channel merges and is for draining liquid water out of the recycle channel or out of the anode gas supply channel; a pump that is provided in the recycle channel or in the anode gas supply channel on a downstream side relative to the position at which the recycle channel merges; and a controller that causes the pump to operate in a state where the applied voltage has been decreased when operation of the compressor is stopped.

## Description

### Technical Field

The present disclosure relates to a hydrogen system.

### Background Art

Due to recent environmental problems such as global warming and energy problems such as exhaustion of oil resources, hydrogen has attracted attention as a clean alternative energy source replacing fossil fuel. When hydrogen is burned, basically only water is generated, and carbon dioxide, which is a cause of global warming, is not discharged, and a nitrogen oxide and the like are hardly discharged. Therefore, hydrogen is expected as clean energy. As a device that highly efficiently utilizes hydrogen as a fuel, for example, fuel cells are being developed and have become widespread for power sources for automobiles and for in-house power generation.

In a coming hydrogen society, development of technologies that enable high-density storage of hydrogen and transport or use of hydrogen in small quantity and at low cost is demanded in addition to production of hydrogen. In particular, it is necessary to build up infrastructure for hydrogen supply in order to promote spread of fuel cells, which are distributed energy resources. In view of this, various studies for production, purification, and high-density storage of high-purity hydrogen are being conducted to stably supply hydrogen.

For example, Patent Literature 1 describes a technique that enables purification and pressurization of hydrogen-containing gas by applying a voltage across an anode and a cathode of a hydrogen purifying pressurizing system. Specifically, application of a voltage across the anode and the cathode turns hydrogen in hydrogen-containing gas into protons. The protons move from the anode to the cathode through an electrolyte membrane together with water molecules and returns to hydrogen at the cathode. Note that a laminate of the anode, the electrolyte membrane, and the cathode is referred to as a membrane electrode assembly (MEA). Patent Literature 1 describes purging gas remaining in the cathode of the system by nitrogen when the hydrogen purifying pressurizing system is stopped.

### Citation List

### Patent Literature

PTL 1: Japanese Patent No. 6299027

### Summary of Invention

### Technical Problem

The present disclosure provides, for example, a hydrogen system that can make a decrease in efficiency of hydrogen compression operation at reboot lower than conventional arts.

### Solution to Problem

A hydrogen system according to an aspect of the present disclosure includes a compressor that causes hydrogen in hydrogen-containing gas supplied to an anode to move to a cathode and produces compressed hydrogen by applying a voltage across the anode and the cathode disposed with an electrolyte membrane interposed therebetween; an anode gas supply channel through which the hydrogen-containing gas to be supplied to the anode flows; a recycle channel through which anode off-gas that is discharged from the anode and then merges with the anode gas supply channel flows; a drainage channel that is provided at a position of the recycle channel or at a position of the anode gas supply channel on a downstream side relative to a position at which the recycle channel merges and is for draining liquid water out of the recycle channel or out of the anode gas supply channel; a pump that is provided in the recycle channel or in the anode gas supply channel on the downstream side relative to the position at which the recycle channel merges; and a controller that causes the pump to operate in a state where the applied voltage has been decreased when operation of the compressor is stopped.

### Advantageous Effects of Invention

A hydrogen system according to an aspect of the present disclosure can produce an effect that a decline in efficiency of hydrogen compression operation at reboot can be made smaller than conventional arts.

### Brief Description of Drawings

[Fig. 1] Fig. 1 illustrates an example of an electrochemical hydrogen pump according to a first embodiment.
[Fig. 2A] Fig. 2A illustrates an example of the electrochemical hydrogen pump according to the first embodiment.
[Fig. 2B] Fig. 2B illustrates an example of the electrochemical hydrogen pump according to the first embodiment.
[Fig. 2C] Fig. 2C illustrates an example of the electrochemical hydrogen pump according to the first embodiment.
[Fig. 2D] Fig. 2D illustrates an example of the electrochemical hydrogen pump according to the first embodiment.
[Fig. 3] Fig. 3 illustrates an example of a hydrogen system according to a modification of the first embodiment.
[Fig. 4] Fig. 4 illustrates an example of a hydrogen system according to a second embodiment.
[Fig. 5] Fig. 5 illustrates an example of a hydrogen system according to a third embodiment.
[Fig. 6] Fig. 6 illustrates an example of a hydrogen system according to a fourth embodiment.
[Fig. 7] Fig. 7 illustrates an example of a hydrogen system according to a fifth embodiment.
[Fig. 8] Fig. 8 is a flowchart illustrating an example of operation of the hydrogen system according to the fifth embodiment.
[Fig. 9] Fig. 9 is a flowchart illustrating an example of operation of a hydrogen system according to a modification of the fifth embodiment. Description of Embodiments

In an electrochemical compressor, an electrolyte membrane generally exhibits desired proton conductivity in a wet state. Accordingly, the electrolyte membrane need be kept in the wet state in order to maintain efficiency of hydrogen compression operation of the compressor at a desired value. In view of this, high-humidity hydrogen-containing gas is typically supplied to an anode of a compressor.

During hydrogen compression operation of a compressor, a voltage is applied across an anode and a cathode of an MEA (cell). Accordingly, in this case, an electric current flows between the anode and the cathode, and protons move from the anode to the cathode through the electrolyte membrane together with water molecules (electro-osmosis). Meanwhile, electro-osmotic water that has moved from the anode to the cathode moves from the cathode to the anode due to a differential pressure between the cathode and the anode (back diffusion). A larger amount of water moves from the cathode to the anode as a gas pressure on the cathode side becomes higher. During hydrogen compression operation of the compressor, even if water is back-diffused from the cathode to the anode, water does not accumulate since hydrogen-containing gas is distributed over the anode, and therefore flooding is unlikely to occur. However, when the compressor is stopped, the voltage applied across the anode and the cathode decreases, and distribution of the hydrogen-containing gas over the anode stops. As a result, until the differential pressure between the anode and the cathode disappears, back diffusion of water continues, and the back-diffused water accumulates on the anode. This increases a possibility of occurrence of flooding at the anode (blockage of a gas flow channel by water) after the stoppage of the compressor. If flooding occurs, diffusion of hydrogen-containing gas over the anode of the compressor is inhibited at reboot. This may increase a voltage of a voltage application unit necessary for movement of a predetermined amount of proton to the cathode. As a result, in the hydrogen system, efficiency of the hydrogen compression operation declines at reboot of the compressor.

In view of this, a hydrogen system according to a first aspect of the present disclosure includes: a compressor that causes hydrogen in hydrogen-containing gas supplied to an anode to move to a cathode and produces compressed hydrogen by applying a voltage across the anode and the cathode disposed with an electrolyte membrane interposed therebetween; an anode gas supply channel through which the hydrogen-containing gas to be supplied to the anode flows; a recycle channel through which anode off-gas that is discharged from the anode and then merges with the anode gas supply channel flows; a drainage channel that is provided at a position of the recycle channel or at a position of the anode gas supply channel on a downstream side relative to a position at which the recycle channel merges and is for draining liquid water out of the recycle channel or out of the anode gas supply channel; a pump that is provided in the recycle channel or in the anode gas supply channel on the downstream side relative to the position at which the recycle channel merges; and a controller that causes the pump to operate in a state where the applied voltage has been decreased when operation of the compressor is stopped.

According to this configuration, the hydrogen system according to this aspect can keep a decline in efficiency of hydrogen compression operation at reboot smaller than conventional arts.

Specifically, the hydrogen system according to this aspect causes the pump to operate so that anode off-gas circulates through the recycle channel, the anode gas supply channel on a downstream side relative to a position at which the recycle channel merges, and a gas flow channel on the anode in the compressor (hereinafter, a circulating path) in a state where the voltage has been decreased when operation of the compressor is stopped. Accordingly, after the decrease in voltage, water back-diffused from the cathode to the anode does not accumulate on the anode, and liquid water in the hydrogen-containing gas circulating through the circulating path including the back-diffused water is drained through the drainage channel. Therefore, in the hydrogen system according to this aspect, flooding is less likely to occur on the anode after stoppage of operation of the compressor, and therefore a decrease in efficiency of hydrogen compression operation at reboot is suppressed.

In the hydrogen system according to the first aspect, the hydrogen system according to a second aspect of the present disclosure may be configured such that a gas-liquid separator is provided in the recycle channel or in the anode gas supply channel on a downstream side relative to the position at which the recycle channel merges, and the drainage channel is connected to a water storage of the gas-liquid separator.

According to the configuration, in the hydrogen system according to this aspect, separation between liquid water in hydrogen-containing gas circulating through the circulating path and the hydrogen-containing gas is promoted by the gas-liquid separator, and thereby the liquid water in the hydrogen-containing gas is properly drained through the drainage channel.

In the hydrogen system according to the first aspect or the second aspect, the hydrogen system according to a third aspect of the present disclosure is configured such that the pump is a hydrogen purifier that is provided in the anode gas supply channel on the downstream side relative to the position at which the recycle channel merges and that causes hydrogen in hydrogen-containing gas supplied to the anode to move to the cathode and generates purified hydrogen by applying a voltage across an anode and a cathode disposed with an electrolyte membrane interposed therebetween.

According to the configuration, the hydrogen system according to this aspect can circulate the hydrogen-containing gas in the circulating path while removing impurities in the hydrogen-containing gas by operating the hydrogen purifier without providing a special circulating pump or the like. This can suppress flooding in the anode of the compressor after stoppage of operation of the compressor. Since the hydrogen-containing gas is also distributed in the hydrogen purifier, flooding in the hydrogen purifier can also be suppressed.

During stoppage of operation of the compressor, the compressor is naturally cooled, and condensed water is generated from high-humidity hydrogen-containing gas. Accordingly, to suppress occurrence of flooding, the operation for circulating the hydrogen-containing gas in the circulating path may be performed until the temperature in the compressor becomes equivalent to an ambient temperature and generation of condensed water from the hydrogen-containing gas stops.

In view of this, in the hydrogen system according to any one of the first through third aspects, the hydrogen system according to a fourth aspect further includes a cooler that cools the compressor, wherein the controller causes the pump to operate and causes the cooler to cool the compressor.

According to the configuration, in the hydrogen system according to this aspect, not only back-diffused water, but also condensed water from the hydrogen-containing gas distributed over the anode are effectively drained through the drainage channel by cooling the compressor during operation for circulating the hydrogen-containing gas in the circulating path when operation of the compressor is stopped. That is, in the hydrogen system according to this aspect, removal of moisture (water vapor and liquid water) on the anode is promoted as compared with a case where the compressor is naturally cooled during the operation for circulating the hydrogen-containing gas. This can shorten a hydrogen-containing gas circulating operation time after decrease in voltage for suppressing flooding on the anode.

In the hydrogen system according to any one of the first through fourth aspects, the hydrogen system according to a fifth aspect of the present disclosure may further include a condenser provided in the recycle channel or in the anode gas supply channel on the downstream side relative to the position at which the recycle channel merges.

According to the configuration, in the hydrogen system according to this aspect, not only back-diffused water, but also condensed water from the hydrogen-containing gas are effectively drained through the drainage channel by condensing water vapor in the hydrogen-containing gas by the condenser during operation for circulating the hydrogen-containing gas in the circulating path when operation of the compressor is stopped. That is, in the hydrogen system according to this aspect, removal of moisture (water vapor and liquid water) on the anode is promoted as compared with a case where the compressor is naturally cooled during the operation for circulating the hydrogen-containing gas. This can shorten a hydrogen-containing gas circulating operation time after decrease in voltage for suppressing flooding on the anode.

In the hydrogen system according to any one of the first through fifth aspects, the hydrogen system according to a sixth aspect of the present disclosure may further include a flow amount regulator that regulates a flow amount of the hydrogen-containing gas in the anode gas supply channel on an upstream side relative to the position at which the recycle channel merges, wherein the controller gradually decreases the flow amount of the hydrogen-containing gas by controlling the flow amount regulator and gradually decreases output of the pump during operation of the pump and then stops the pump.

According to the configuration, the hydrogen system according to this aspect can properly drain liquid water through the drainage channel while introducing the hydrogen-containing gas into the circulating path during operation of the pump for circulating anode off-gas through the circulating path when operation of the compressor is stopped.

Specifically, in the hydrogen system according to this aspect, the temperature of the compressor decreases with channel of time and thereby water vapor in the hydrogen-containing gas on the anode is condensed during operation of the pump for circulating anode off-gas through the circulating path when operation of the compressor is stopped. Since a decrease in pressure occurs due to a decrease in gas molecule molar quantity of hydrogen-containing gas present in the circulating path, there is a possibility that the pressure in the circulating path becomes negative. This allows air to infiltrate from an outside into the circulating path, thereby leading to a risk of degradation of cells of the compressor.

In view of this, the hydrogen system according to this aspect can keep the pressure in the circulating path from becoming negative by introducing hydrogen-containing gas into the circulating path from the anode gas supply channel on an upstream side relative to a position at which the recycle channel merges by using the flow amount regulator so as to compensate for the decrease in pressure of the hydrogen-containing gas in the circulating path.

As is easily understood from a curve of a saturated water vapor amount in hydrogen-containing gas correlated to a temperature of the hydrogen-containing gas, an amount of water condensed from water vapor in the hydrogen-containing gas decreases as the temperature of the hydrogen-containing gas decreases with channel of time. Therefore, the hydrogen system according to this aspect can introduce an appropriate amount of hydrogen-containing gas to the circulating path from an upstream side of the anode gas supply channel by gradually decreasing a flow amount of the hydrogen-containing gas and pump output with channel of time.

In the hydrogen system according to the sixth aspect, the hydrogen system according to a seventh aspect of the present disclosure may be configured such that in a case where in stopping operation of the compressor due to occurrence of an abnormality and it is impossible to supply hydrogen-containing gas from a hydrogen-containing gas supply source, the controller stops the pump after gradually decreasing output of the pump without controlling the flow amount regulator.

According to the configuration, the hydrogen system according to this aspect can properly perform system stopping operation in a case where it is impossible to supply hydrogen-containing gas due to an abnormality of a hydrogen-containing gas supply source.

Embodiments of the present disclosure are described below with reference to the attached drawings. Each of the embodiments below illustrates an example of each aspect described above. Numerical values, shapes, materials, constituent elements, positions of the constituent elements, and a way in which the constituent elements are connected illustrated below are merely examples and do not limit the above aspects unless specified in the claims. Among constituent elements described below, constituent elements that are not recited in independent claims showing highest concepts of the aspects are described as optional constituent elements. Furthermore, description of constituent elements given identical reference signs in the drawings may be omitted. In the drawings, constituent elements are schematically illustrated for easier understanding, and shapes and dimensional ratios are sometimes inaccurate. In operation, an order of steps and the like may be changed and other known steps may be added as needed.

### (First Embodiment)

In the embodiment below, a configuration and operation of an electrochemical hydrogen pump, which is an example of the compression device, are described.

### [Device Configuration]

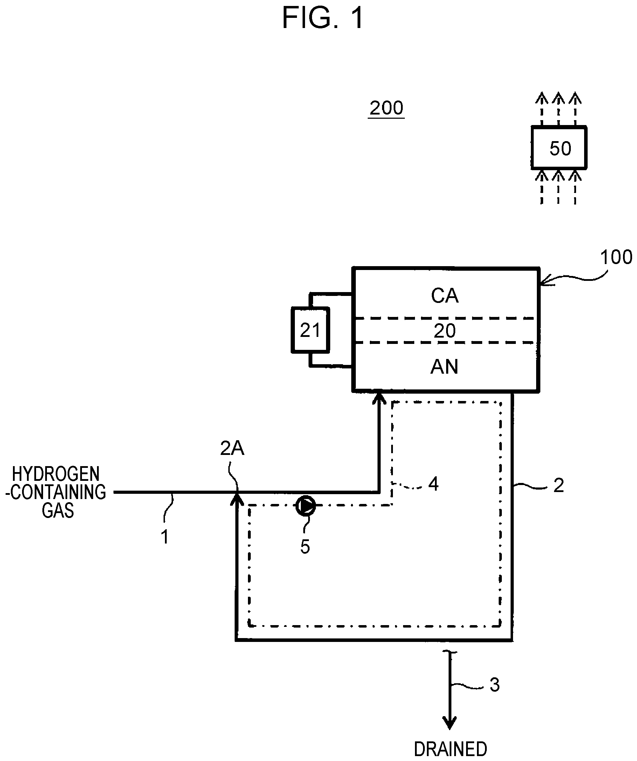

Fig. 1 illustrates an example of an electrochemical hydrogen pump according to the first embodiment.

In the example illustrated in Fig. 1, a hydrogen system 200 according to the present embodiment includes an electrochemical hydrogen pump 100. The electrochemical hydrogen pump 100 may include a stack in which a plurality of MEAs (cells) are laminated. Details will be described later.

The electrochemical hydrogen pump 100 includes an electrolyte membrane 20, an anode AN, a cathode CA, and a voltage application unit 21.

The anode AN is provided on one main surface of the electrolyte membrane 20. The anode AN is an electrode including an anode catalytic layer and an anode gas diffusion layer. The cathode CA is provided on the other main surface of the electrolyte membrane 20. The cathode CA is an electrode including a cathode catalytic layer and a cathode gas diffusion layer. Accordingly, the electrolyte membrane 20 is held between the anode AN and the cathode CA so as to be in contact with the anode catalytic layer and the cathode catalytic layer.

The electrolyte membrane 20 may have any configuration as long as the electrolyte membrane 20 is a membrane having proton conductivity. For example, the electrolyte membrane 20 may be a fluorine polymer electrolyte membrane or a hydrocarbon electrolyte membrane. Specific examples of the electrolyte membrane 20 include, but are not limited to, Nafion (Registered Trademark, produced by DuPont de Nemours, Inc.) and Aciplex (Registered Trademark, produced by Asahi Kasei Corporation).

The anode catalytic layer is provided on one main surface of the electrolyte membrane 20. The anode catalytic layer contains carbon that can hold a catalytic metal (e.g., platinum) in a distributed state but is not limited to this.

The cathode catalytic layer is provided on the other main surface of the electrolyte membrane 20. The cathode catalytic layer contains carbon that can hold a catalytic metal (e.g., platinum) in a distributed state but is not limited to this.

Various methods can be used to prepare a catalyst for the cathode catalytic layer and a catalyst for the anode catalytic layer, but a method for preparing the catalyst is not limited in particular. Examples of carbon power include powder such as graphite, carbon black, and activated carbon having electric conductivity. A method for holding platinum or any of other catalytic metals on a carbon carrier is not limited in particular. For example, a method such as powder mixing or liquid-phase mixing may be used. The latter liquid-phase mixing is, for example, a method for dispersing a carrier such as carbon in a catalytic component colloid liquid and causing a catalytic metal to adsorb onto the carrier. A state in which a catalytic metal such as platinum is held on a carbon carrier is not limited in particular. For example, the catalytic metal may be turned into fine particles, and the fine particles may be held on a carrier in a highly distributed state.

The cathode gas diffusion layer is provided on the cathode catalytic layer. The cathode gas diffusion layer is made of a porous material and has electric conductivity and gas diffusivity. The cathode gas diffusion layer desirably has elasticity so as to properly follow displacement and deformation of constituent members that occur due to a differential pressure between the cathode CA and the anode AN during operation of the electrochemical hydrogen pump 100. A base material of the cathode gas diffusion layer can be, for example, a carbon fiber sintered body but is not limited to this.

The anode gas diffusion layer is provided on the anode catalytic layer. The anode gas diffusion layer is made of a porous material and has electric conductivity and gas diffusivity. The anode gas diffusion layer desirably has rigidity so as to be capable of withstanding pressing of the electrolyte membrane 20 by the differential pressure during operation of the electrochemical hydrogen pump 100. A base material of the anode gas diffusion layer can be, for example, a carbon particle sintered body but is not limited to this.

The voltage application unit 21 is a device that applies a voltage across the anode AN and the cathode CA disposed with the electrolyte membrane 20 interposed therebetween. The voltage application unit 21 can have any configuration that can apply a voltage across the anode AN and the cathode CA. In the example illustrated in Fig. 1, a high-potential-side terminal of the voltage application unit 21 is connected to the anode AN, and a low-potential-side terminal of the voltage application unit 21 is connected to the cathode CA. In this way, electricity is passed between the anode AN and the cathode CA by the voltage application unit 21. In the electrochemical hydrogen pump 100 according to the present embodiment, when the voltage application unit 21 applies a voltage across the anode AN and the cathode CA, hydrogen in hydrogen-containing gas supplied to the anode AN is moved to the cathode CA, and compressed hydrogen is generated.

The voltage application unit 21 can be, for example, a DC/DC converter or an AC/DC converter. The DC/DC converter is used in a case where the voltage application unit 21 is connected to a DC power source such as a solar cell, a fuel cell, or a battery. The AC/DC converter is used in a case where the voltage application unit 21 is connected to an AC power source such as a commercial power source.

The voltage application unit 21 may be, for example, a power-type power source that adjusts a voltage applied across the anode AN and the cathode CA and an electric current flowing between the anode AN and the cathode CA so that power supplied to a cell of the electrochemical hydrogen pump 100 becomes a predetermined setting value.

The hydrogen-containing gas may be, for example, hydrogen gas generated by electrolysis of water or may be, for example, reformed gas generated by reforming of hydrocarbon gas.

Members and equipment necessary for hydrogen compression operation of the hydrogen system 200 are provided as appropriate although these members and equipment are not illustrated in Fig. 1.

For example, a pair of separators may hold the anode AN and the cathode CA from outer sides, respectively. In this case, the separator that makes contact with the anode AN is an electrically conductive plate-shaped member for supplying the hydrogen-containing gas to the anode AN. This plate-shaped member includes a serpentine-shaped gas channel through which the hydrogen-containing gas to be supplied to the anode AN flows. The separator that makes contact with the cathode CA is an electrically conductive plate-shaped member for guiding hydrogen out from the cathode CA. This plate-shaped member includes a gas channel through which hydrogen guided out from the cathode CA flows.

Furthermore, the electrochemical hydrogen pump 100 typically has sealing members such as gaskets provided on respective sides of the cell so that high-pressure hydrogen does not leak to the outside. The sealing members are assembled in advance integrally with the cell of the electrochemical hydrogen pump 100. The separators are disposed on outer sides of the cell to mechanically fix the cell and electrically connect adjacent cells in series with each other.

A typical laminated structure is a structure in which a cell and a separator are alternately stacked until about 10 to 200 cells are stacked, and a laminate (stack) of the cells and separators are held by end plates with collector plates and insulating plates interposed therebetween, and the end plates are fastened by fastening rods. In this case, to supply a suitable amount of hydrogen-containing gas to a gas flow channel of each of the separators, it is necessary to provide, in each of the separators, a groove-shaped branch path branching from an appropriate pipe path and connect downstream ends of these branch paths to gas flow channels of the separators. Such a pipe path is called a manifold, and this manifold is, for example, constituted by a series of through-holes provided at appropriate positions of members that constitute the stack.

Furthermore, the hydrogen system 200 may be provided with a temperature detector that detects a temperature of the cells, a temperature adjuster that adjusts a temperature of the cells, a dew point adjuster that adjusts a dew point of the hydrogen-containing gas to be supplied to the anode AN, and the like.

Note that the above members and equipment (not illustrated) are merely examples and are not limited to these examples.

As illustrated in Fig. 1, the hydrogen system 200 includes an anode gas supply channel 1, a recycle channel 2, a drainage channel 3, a pump 5, and a controller 50.

The anode gas supply channel 1 is a flow channel through which hydrogen-containing gas to be supplied to the anode AN of the electrochemical hydrogen pump 100 flows. In a case where the electrochemical hydrogen pump 100 includes the stack described above, a downstream end of the anode gas supply channel 1 may be, for example, communicated with a manifold for introducing the hydrogen-containing gas. Furthermore, an upstream end of the anode gas supply channel 1 may be, for example, connected to a hydrogen-containing gas supply source (not illustrated). Examples of the hydrogen-containing gas supply source include a reformer, a water electrolysis device, and a hydrogen tank.

The recycle channel 2 is a flow channel through which anode off-gas, which is discharged from the anode AN of the electrochemical hydrogen pump 100 and then merges with the anode gas supply channel 1, flows. In a case where the electrochemical hydrogen pump 100 includes the stack described above, an upstream end of the recycle channel 2 may be, for example, communicated with a manifold for guiding out the hydrogen-containing gas.

As described above, in the hydrogen system 200 according to the present embodiment, a circulating path 4 through which the anode off-gas discharged from the anode AN circulates is formed by the recycle channel 2, the anode gas supply channel 1 on a downstream side relative to a position 2A at which the recycle channel 2 merges, and a gas flow channel (not illustrated) on the anode AN of the electrochemical hydrogen pump 100, as illustrated in Fig. 1.

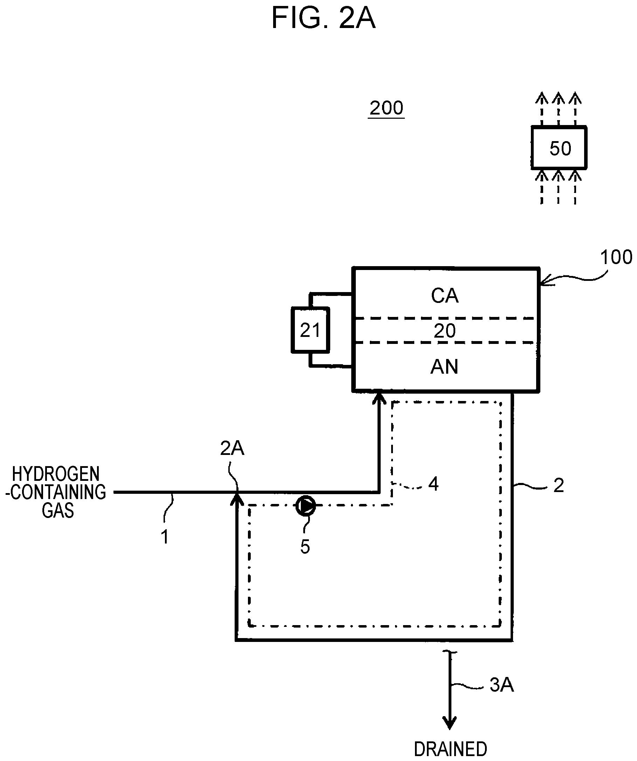

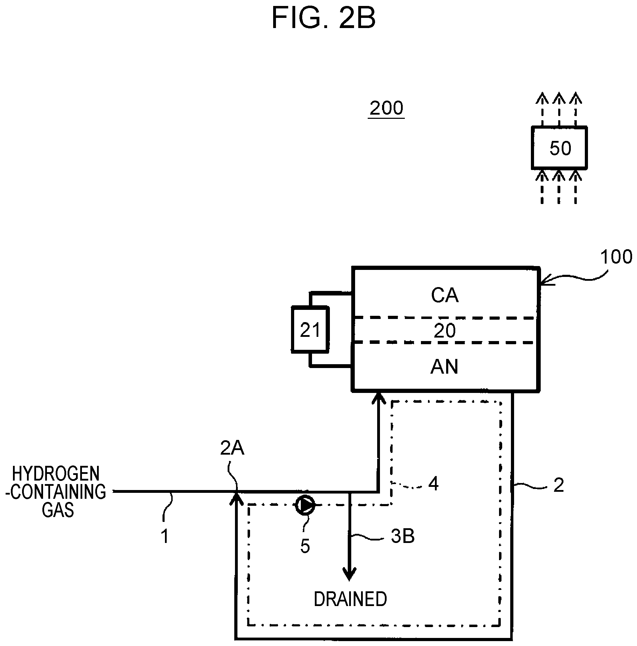

The drainage channel 3 is a flow channel that is provided at a position of the recycle channel 2 or at a position of the anode gas supply channel 1 on a downstream side relative to the position 2A at which the recycle channel 2 merges and is for discharging liquid water out of the recycle channel 2 or the anode gas supply channel 1. An upstream end of the drainage channel 3 may be connected to any position of a flow channel through which the anode off-gas discharged from the anode AN flows. For example, in the example illustrated in Fig. 2A, the upstream end of the drainage channel 3A is connected to the recycle channel 2. In this case, liquid water in the anode off-gas is drained from the drainage channel 3A. In the example illustrated in Fig. 2B, the upstream end of the drainage channel 3B is connected to the anode gas supply channel 1 on a downstream side relative to the position 2A at which the recycle channel 2 merges. In this case, liquid water in the hydrogen-containing gas to be supplied to the anode AN is drained from the drainage channel 3B, and this liquid water contains liquid water in the anode off-gas merging with the anode gas supply channel 1.

Note that the drainage channel 3 may be provided with an appropriate opening closing valve (not illustrated), and an end of a flow channel extending from this opening closing valve may be opened to an outside. This allows condensed water in the drainage channel 3 to be drained to the outside at an appropriate timing by opening and closing of the opening closing valve.

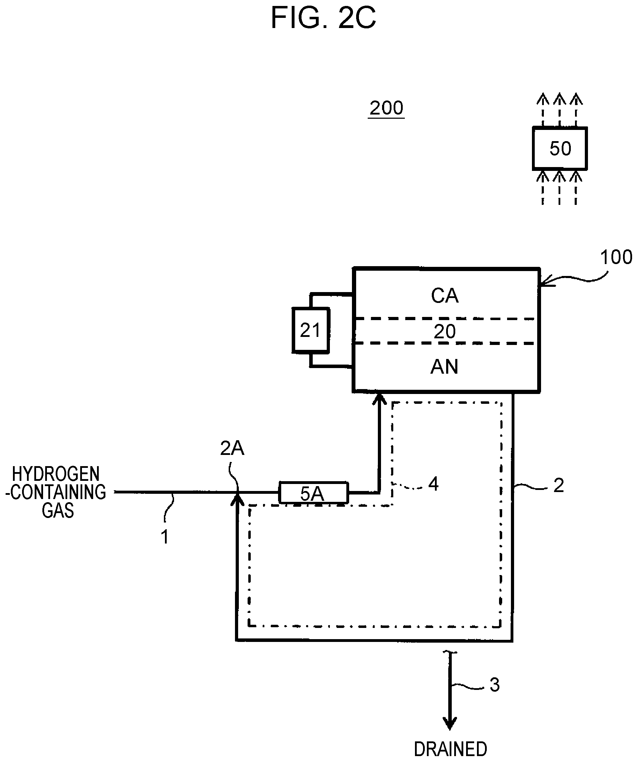

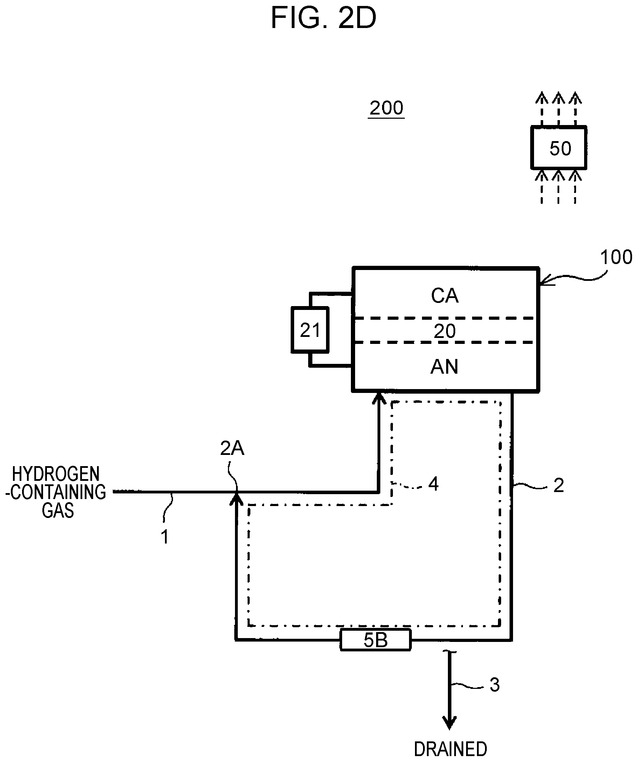

The pump 5 is a device that is provided in the recycle channel 2 or in the anode gas supply channel 1 on a downstream side relative to the position 2A at which the recycle channel 2 merges. That is, the pump 5 is a device for circulating the anode off-gas discharged from the anode AN through the circulating path 4. The pump 5 may be provided at any position of a flow channel through which the anode off-gas discharged from the anode AN flows. For example, in the example illustrated in Fig. 2C, a pump 5A is provided in the anode gas supply channel 1 on a downstream side relative to the position 2A at which the recycle channel 2 merges. In the example illustrated in Fig. 2D, a pump 5B is provided in the recycle channel 2.

The pump 5 may be any kind of pump that can circulate such anode off-gas through the circulating path 4. Examples of the pump 5 include, but are not limited to, a constant-volume reciprocating pump and rotary pump. For example, the pump 5 may be an electrochemical hydrogen purifier (hydrogen pump). Details will be described in the second embodiment.

The controller 50 causes the pump 5 to operate in a state where the applied voltage has been decreased when operation of the electrochemical hydrogen pump 100 is stopped. To "stop operation of the electrochemical hydrogen pump 100" is to stop operation for supplying compressed hydrogen generated in the cathode CA of the electrochemical hydrogen pump 100 from the cathode CA to a hydrogen demander (not illustrated). Examples of the hydrogen demander include a hydrogen reservoir and a fuel cell. Examples of the hydrogen reservoir include a dispenser and a hydrogen tank installed at a hydrogen station. The "state where the applied voltage has been decreased" may be a state where application of a voltage across the anode AN and the cathode CA has been stopped or may be a state where a voltage lower than the voltage applied across the anode AN and the cathode CA immediately before start of control (stopping control) for stopping operation of the electrochemical hydrogen pump 100 and larger than 0 is applied.

The controller 50 includes, for example, an arithmetic circuit (not illustrated) and a memory circuit (not illustrated) in which a control program is stored. The arithmetic circuit can be, for example, an MPU or a CPU. The memory circuit can be, for example, a memory. The controller 50 may be a single controller that performs concentrated control or may be a plurality of controllers that perform distributed control in cooperation with one another.

### [Operation]

An example of hydrogen compression operation of the hydrogen system 200 is described below with reference to the drawings. The following operation may be performed, for example, when the arithmetic circuit of the controller 50 reads out a control program from the memory circuit of the controller 50.

Note, however, that it is not essential that the controller 50 performs the following operation. An operator may perform part of the operation.

First, low-pressure and high-humidity hydrogen-containing gas is supplied to the anode AN of the electrochemical hydrogen pump 100, and a voltage of the voltage application unit 21 is fed to the electrochemical hydrogen pump 100. This causes hydrogen molecules into protons and electrons in the anode catalytic layer of the anode AN (formula (1)). The protons move to the cathode catalytic layer through the electrolyte membrane 20. The electrons move to the cathode catalytic layer through the voltage application unit 21.

Then, hydrogen molecules are generated again in the cathode catalytic layer (formula (2)). Note that it is known that when the protons move through the electrolyte membrane 20, a predetermined amount of water moves as electro-osmotic water from the anode AN to the cathode CA together with the protons.

For example, in a case where high-pressure hydrogen generated by the cathode CA of the electrochemical hydrogen pump 100 is supplied to the hydrogen reservoir (not illustrated) through a cathode gas outflow channel (not illustrated), the hydrogen (H₂) generated in the cathode CA can be compressed by increasing a pressure loss of the cathode gas outflow channel by using a back pressure valve, a regulating valve (not illustrated), or the like provided in the cathode gas outflow channel. Increasing the pressure loss of the cathode gas outflow channel corresponds to reducing a degree of opening of the back pressure valve or the regulating valve provided in the cathode gas outflow channel.

anode: H₂ (low pressure) → 2H⁺ + 2e⁻ ... (1)

cathode: 2H⁺ + 2e⁻ → H₂ (high pressure) ... (2)

In this way, operation for moving hydrogen in hydrogen-containing gas supplied to the anode AN to the cathode CA through the electrolyte membrane 20 and compressing the hydrogen by applying a voltage across the anode AN and the cathode CA of the electrochemical hydrogen pump 100 is performed in the hydrogen system 200. The high-pressure hydrogen generated in the cathode CA is, for example, temporarily stored in a hydrogen reservoir, which is an example of a hydrogen demander, after moisture, impurities, and the like in the hydrogen are removed. Furthermore, the hydrogen stored in the hydrogen reservoir is supplied to a fuel cell, which is an example of a hydrogen demander, at an appropriate timing.

Next, the operation of the electrochemical hydrogen pump 100 is stopped. When the operation is stopped, the voltage applied across the anode AN and the cathode CA of the electrochemical hydrogen pump 100 is decreased.

In a case where the electrochemical hydrogen pump 100 is, for example, a compressor for a fuel-cell forklift, high-pressure hydrogen of approximately 40 MPa is present on the cathode CA side when the hydrogen compression operation is stopped. Furthermore, low-pressure (approximately 0.1 MPa) and high-humidity (for example, relative humidity of approximately 12% at approximately 50°C) hydrogen-containing gas is present on the anode AN side.

In view of this, the pump 5 is operated while the voltage has been decreased. This causes anode off-gas to circulates through the circulating path 4, thereby allowing liquid water that moves by the circulation of the anode off-gas to be drained through the drainage channel 3.

As described above, the hydrogen system 200 according to the present embodiment can keep a decline in efficiency of hydrogen compression operation at reboot smaller than conventional arts.

Specifically, the hydrogen system 200 according to the present embodiment causes the pump 5 to operate so that anode off-gas circulates through the circulating path 4 in a state where the applied voltage has been decreased when operation of the electrochemical hydrogen pump 100 is stopped. As a result, after the decrease in voltage, water back-diffused from the cathode CA to the anode AN does not accumulate on the anode AN, and liquid water in hydrogen-containing gas circulating through the circulating path 4 including the back-diffused water is drained through the drainage channel 3. Therefore, in the hydrogen system 200 according to the present embodiment, flooding is less likely to occur in the anode AN after stoppage of operation of the electrochemical hydrogen pump 100, and therefore a decline in efficiency of hydrogen compression operation at reboot can be kept small.

### (Modification)

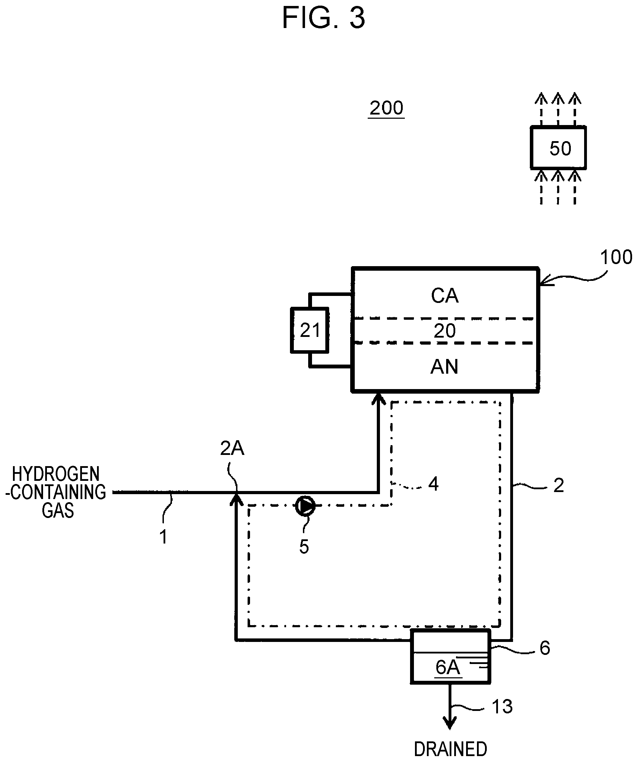

Fig. 3 illustrates an example of a hydrogen system according to a modification of the first embodiment.

In the example illustrated in Fig. 3, a hydrogen system 200 includes an electrochemical hydrogen pump 100, an anode gas supply channel 1, a recycle channel 2, a drainage channel 13, a pump 5, a gas-liquid separator 6, and a controller 50.

The electrochemical hydrogen pump 100, the anode gas supply channel 1, the recycle channel 2, the pump 5, and the controller 50 are similar to those in the first embodiment, and therefore description thereof is omitted.

In the example illustrated in Fig. 3, the gas-liquid separator 6 is provided in the recycle channel 2, and the drainage channel 13 is connected to a water storage 6A of the gas-liquid separator 6. That is, in the hydrogen system 200 according to the present modification, a space in the gas-liquid separator 6 constitutes a part of a circulating path 4 through which anode off-gas discharged from an anode AN circulates.

However, such position and configuration of the gas-liquid separator 6 are illustrative and are not limited to this example. For example, a gas-liquid separator may be provided in the anode gas supply channel 1 on a downstream side relative to a position 2A at which the recycle channel 2 merges although illustration thereof is omitted.

In the hydrogen system 200 according to the present modification configured as above, separation between liquid water in hydrogen-containing gas circulating through the circulating path 4 and the hydrogen-containing gas is promoted by the gas-liquid separator 6, and thereby the liquid water in the hydrogen-containing gas is properly drained through the drainage channel 13.

The hydrogen system 200 according to the present modification may be similar to the hydrogen system 200 according to the first embodiment except for the above feature.

### (Second Embodiment)

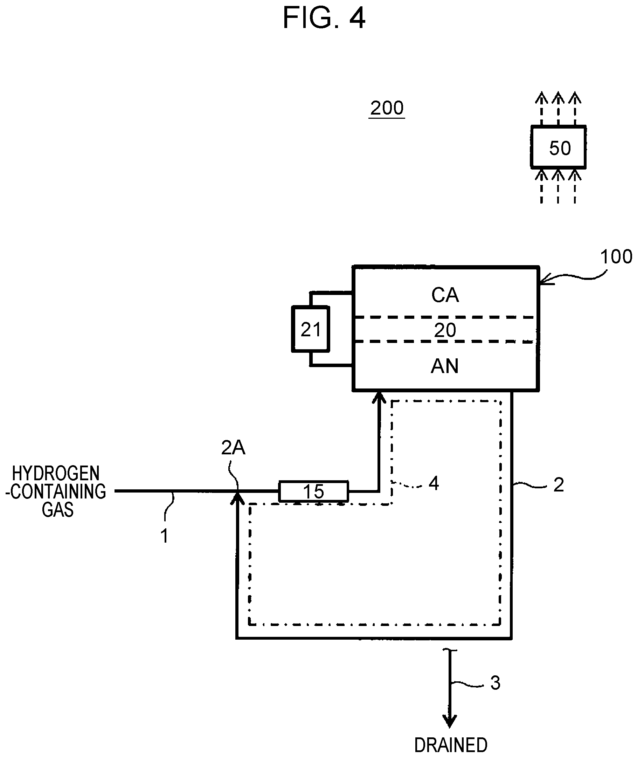

Fig. 4 illustrates an example of a hydrogen system according to a second embodiment.

In the example illustrated in Fig. 4, a hydrogen system 200 includes an electrochemical hydrogen pump 100, an anode gas supply channel 1, a recycle channel 2, a drainage channel 3, a pump 15, and a controller 50.

The electrochemical hydrogen pump 100, the anode gas supply channel 1, the recycle channel 2, the drainage channel 3, and the controller 50 are similar to those in the first embodiment, and therefore description thereof is omitted.

In the example illustrated in Fig. 4, the pump 15 is a hydrogen purifier that is provided in the anode gas supply channel 1 on a downstream side relative to a position 2A at which the recycle channel 2 merges and generates purified hydrogen by moving, to a cathode, hydrogen in hydrogen-containing gas supplied to an anode by applying a voltage across the anode and the cathode that are disposed with an electrolyte membrane interposed therebetween. The hydrogen purifier may be an electrochemical hydrogen pump having specifications for low pressure. Since, for example, hydrogen of approximately several tens to several hundreds of KPa can be compressed, that is, pressurized by the cathode of the hydrogen purifier by applying a voltage across the cathode and the anode of the hydrogen purifier, the hydrogen purifier can function in a manner equivalent to a pump. In this case, a stack of the hydrogen purifier is similar to a stack of the electrochemical hydrogen pump 100 except for that stacked members are constituted by materials and forms for low pressure.

The hydrogen system 200 according to the present embodiment configured as above can circulate hydrogen-containing gas in the circulating path 4 while removing impurities (e.g., CO₂) in the hydrogen-containing gas by operating the hydrogen purifier without providing a special circulating pump or the like. This can suppress flooding in an anode AN of the electrochemical hydrogen pump 100 after stoppage of operation of the electrochemical hydrogen pump 100. Since hydrogen-containing gas is also distributed in the hydrogen purifier, flooding in the hydrogen purifier can also be suppressed.

The hydrogen system 200 according to the present embodiment may be similar to the hydrogen system 200 according to the first embodiment or the modification of the first embodiment except for the above feature.

### (Third Embodiment)

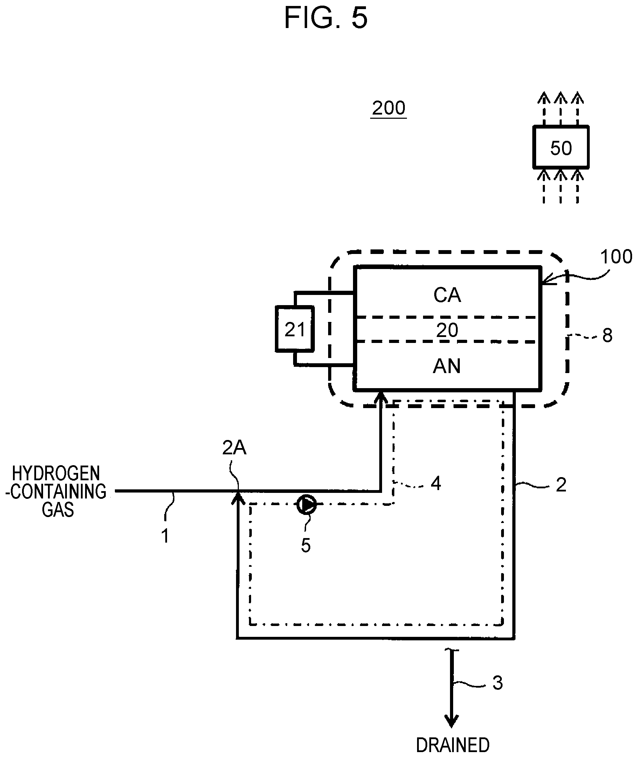

Fig. 5 illustrates an example of a hydrogen system according to the third embodiment.

In the example illustrated in Fig. 5, a hydrogen system 200 includes an electrochemical hydrogen pump 100, an anode gas supply channel 1, a recycle channel 2, a drainage channel 3, a pump 5, a cooler 8, and a controller 50.

The electrochemical hydrogen pump 100, the anode gas supply channel 1, the recycle channel 2, the drainage channel 3, and the pump 5 are similar to those of the first embodiment, and description thereof is omitted.

The cooler 8 is a device that cools the electrochemical hydrogen pump 100. This can lower a temperature of hydrogen-containing gas circulating through a circulating path 4 earlier than, for example, a case where the electrochemical hydrogen pump 100 is cooled naturally. This promotes condensation of water vapor in the hydrogen-containing gas. As a result, a dew point of the hydrogen-containing gas decreases early.

The cooler 8 can have any configuration as long as the cooler 8 can cool the electrochemical hydrogen pump 100. For example, the cooler 8 may include a device for supplying refrigerant to a refrigerant flow channel (not illustrated) or the like provided in members that constitute a stack of the electrochemical hydrogen pump 100.

The controller 50 causes the pump 5 to operate and causes the cooler 8 cool the electrochemical hydrogen pump 100. By controlling a temperature, a flow amount, and the like of the refrigerant when operation of the electrochemical hydrogen pump 100 is stopped, the electrochemical hydrogen pump 100 can be cooled speedily. Examples of the refrigerant include, but are not limited to, liquid water and an antifreeze liquid.

In the hydrogen system 200 according to the present embodiment configured as above, not only back-diffused water, but also condensed water from the hydrogen-containing gas distributed over the anode AN are effectively drained through the drainage channel 3 by cooling the electrochemical hydrogen pump 100 during operation for circulating the hydrogen-containing gas in the circulating path 4 when operation of the electrochemical hydrogen pump 100 is stopped. That is, in the hydrogen system 200 according to the present embodiment, removal of moisture (water vapor and liquid water) on the anode AN is promoted as compared with the electrochemical hydrogen pump 100 is naturally cooled during hydrogen-containing gas circulating operation. This can shorten a hydrogen-containing gas circulating operation time after a decline in voltage for suppressing flooding on the anode AN.

The hydrogen system 200 according to the present embodiment may be similar to the hydrogen system 200 according to any of the first embodiment, the modification of the first embodiment, and the second embodiment except for the above feature.

### (Fourth Embodiment)

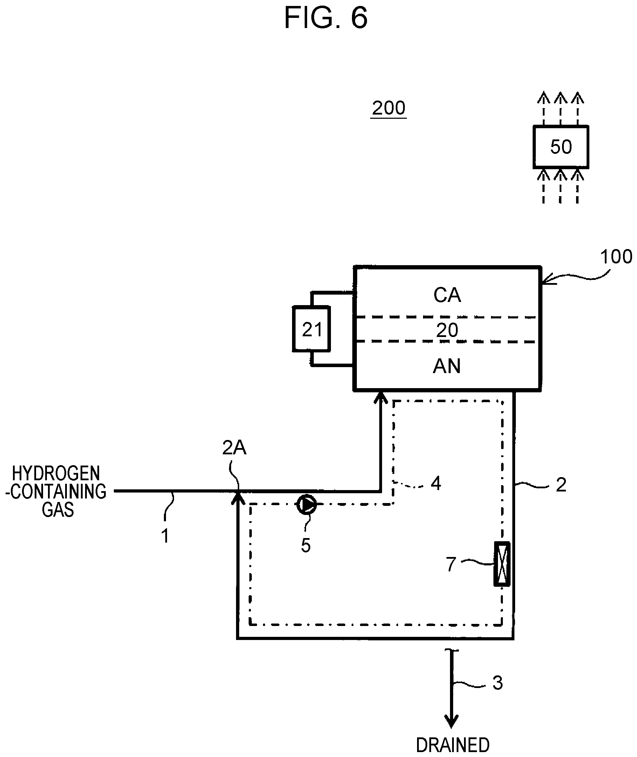

Fig. 6 illustrates an example of a hydrogen system according to a fourth embodiment.

In the example illustrated in Fig. 6, the hydrogen system 200 includes an electrochemical hydrogen pump 100, an anode gas supply channel 1, a recycle channel 2, a drainage channel 3, a pump 5, a condenser 7, and a controller 50.

The electrochemical hydrogen pump 100, the anode gas supply channel 1, the recycle channel 2, the drainage channel 3, and the pump 5 are similar to those of the first embodiment, and description thereof is omitted.

The condenser 7 is a device for condensing water vapor in hydrogen-containing gas. For example, the condenser 7 may include a cooler for cooling a pipe that constitutes a circulating path 4. This can lower a temperature of hydrogen-containing gas circulating through the circulating path 4 earlier than a case where this pipe is naturally cooled. This promotes condensation of water vapor in the hydrogen-containing gas. As a result, a dew point of the hydrogen-containing gas decreases early.

The condenser 7 may be provided at any position of the circulating path 4 excluding a gas flow channel on an anode AN of the electrochemical hydrogen pump 100, in other words, the circulating path 4 outside the electrochemical hydrogen pump 100. For example, the condenser 7 may be provided in the recycle channel 2, may be provided in the anode gas supply channel 1 on a downstream side relative to a position 2A at which the recycle channel 2 merges, or may be provided in both of the recycle channel 2 and the anode gas supply channel 1.

However, in a case where the condenser 7 is provided in the recycle channel 2, the condenser 7 is desirably provided at a position that allows condensed water generated in the condenser 7 to be easily drained in a drainage channel 3A or a gas-liquid separator 6. That is, in the example illustrated in Fig. 2A, the condenser 7 is suitably provided in the recycle channel 2 on an upstream side relative to the drainage channel 3A. In the example illustrated in Fig. 3, the condenser 7 is suitably provided in the recycle channel 2 on an upstream side relative to the gas-liquid separator 6. With this configuration, condensed water generated in the condenser 7 moves through the recycle channel 2 on a downstream side relative to the condenser 7 due to flow of anode off-gas, and thereby the condensed water can be properly drained through the drainage channel 3A provided in the recycle channel 2 or a drainage channel 13 provided in the gas-liquid separator 6. The condenser 7 may be, for example, a heat exchanger that exchanges heat between refrigerant such as air, water, or antifreeze liquid and hydrogen-containing gas.

In the hydrogen system 200 according to the present embodiment configured as above, not only back-diffused water, but also condensed water from the hydrogen-containing gas are effectively drained through the drainage channel 3 by condensing water vapor in the hydrogen-containing gas by the condenser 7 during operation for circulating the hydrogen-containing gas in the circulating path 4 when operation of the electrochemical hydrogen pump 100 is stopped. That is, in the hydrogen system 200 according to the present embodiment, removal of moisture (water vapor and liquid water) on the anode AN is promoted as compared with a case where the electrochemical hydrogen pump 100 is naturally cooled during hydrogen-containing gas circulating operation. This can shorten a hydrogen-containing gas circulating operation time after a decrease in voltage for suppressing flooding on the anode AN.

The hydrogen system 200 according to the present embodiment may be similar to the hydrogen system 200 according to any of the first embodiment, the modification of the first embodiment, the second embodiment, and the third embodiment except for the above feature.

### (Fifth Embodiment)

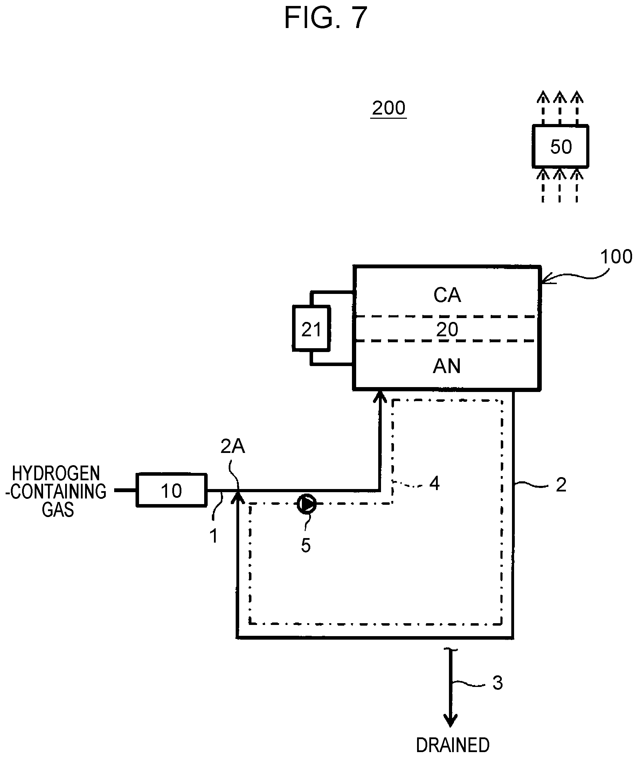

Fig. 7 illustrates an example of a hydrogen system according to a fifth embodiment.

In the example illustrated in Fig. 7, a hydrogen system 200 includes an electrochemical hydrogen pump 100, an anode gas supply channel 1, a recycle channel 2, a drainage channel 3, a pump 5, a flow amount regulator 10, and a controller 50.

The electrochemical hydrogen pump 100, the anode gas supply channel 1, the recycle channel 2, the drainage channel 3, and the pump 5 are similar to those in the first embodiment, and description thereof is omitted.

The flow amount regulator 10 is a device that adjusts a flow amount of hydrogen-containing gas in the anode gas supply channel 1 on an upstream side relative to a position 2A at which the recycle channel 2 merges. The flow amount regulator 10 can have any configuration as long as the flow amount regulator 10 can adjust a flow amount of the hydrogen-containing gas. The flow amount regulator 10 can be, for example, flow amount regulating device including a flow amount regulating valve, a mass flow controller, a booster, or the like. Note that the flow amount regulator 10 may include a flowmeter together with the flow amount regulating device.

The hydrogen-containing gas is supplied from a hydrogen-containing gas supply source to the flow amount regulating device. Examples of the hydrogen-containing gas supply source include a reformer, a water electrolysis device, and a hydrogen tank, as described above. In a case where the hydrogen-containing gas supply source has a predetermined supply pressure, a flow amount of hydrogen-containing gas in the anode gas supply channel 1 may be regulated by controlling a degree of opening of a flow amount regulating valve, which is an example of the flow amount regulating device.

The controller 50 gradually decreases a flow amount of the hydrogen-containing gas by controlling the flow amount regulator 10 and gradually decreases output of the pump 5 during operation of the pump 5 and then stops the pump 5. Note that a detector necessary for control of the flow amount regulator 10 and the pump 5 by the controller 50 is provided as appropriate (not illustrated). Specifically, for example, the hydrogen system 200 includes a temperature detector and a voltage detector. The temperature detector is a sensor that detects a temperature of a stack of the electrochemical hydrogen pump 100 and can be, for example, a thermistor or a thermocouple. The voltage detector is a voltage sensor that detects a potential difference applied across an anode AN and a cathode CA of the electrochemical hydrogen pump 100.

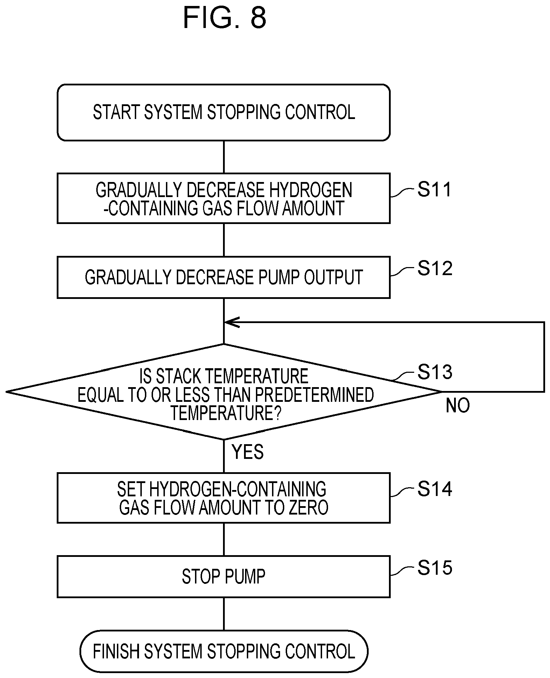

Fig. 8 is a flowchart illustrating an example of operation of the hydrogen system according to the fifth embodiment. The operation illustrated in Fig. 8 may be performed, for example, when an arithmetic circuit of the controller 50 reads out a control program from a memory circuit of the controller 50. Note, however, that it is not essential that this operation is performed by the controller 50. An operator may perform part of the operation.

First, when control for stopping the hydrogen system 200 starts, a voltage applied across the anode AN and the cathode CA by the voltage application unit 21 is decreased. For example, the voltage applied across the anode AN and the cathode CA may be set to zero volt.

Next, the flow amount regulator 10 is controlled to gradually decrease a flow amount of hydrogen-containing gas with channel of time in step S11, and the pump 5 is controlled so as to gradually decrease pump output with channel of time in step S12. The operation in step S11 and the operation in step S12 are performed so that timings thereof overlap each other.

Next, in step S13, it is determined whether or not a stack temperature of the electrochemical hydrogen pump 100 is equal to or less than a predetermined temperature. The "predetermined temperature" in step S13 is, for example, approximately 30°C but is not limited to this.

In a case where the stack temperature of the electrochemical hydrogen pump 100 is higher than the predetermined temperature ("No" in step S13), the current state is maintained.

In a case where the stack temperature of the electrochemical hydrogen pump 100 becomes equal to or less than the predetermined temperature ("Yes" in step S13), the processing proceeds to a next step. In step S14, the flow amount regulator 10 is controlled so that the flow amount of hydrogen-containing gas becomes zero, and in step S15, the pump 5 is controlled so that pump output is stopped. Although the operation in step S14 is performed before the operation in step S15 in Fig. 8, this is not restrictive. The operation in step S14 and the operation in step S15 may be concurrently performed or the operation in step S15 may be performed before the operation in step S14 (not illustrated).

The above operation is illustrative and is not limited to this example. For example, in the determining step in step S13, for example, "operating time of the pump 5" may be used instead of the "stack temperature". In this case, the operation in step S14 and the operation in step S15 are performed when the operating time of the pump 5 becomes equal to or longer than a predetermined time.

In the hydrogen system 200 according to the present embodiment configured as above, liquid water can be properly drained through the drainage channel 3 while introducing hydrogen-containing gas into the circulating path 4 during operation of the pump 5 for circulating anode off-gas through the circulating path 4 when operation of the electrochemical hydrogen pump 100 is stopped.

Specifically, in the hydrogen system 200 according to the present embodiment, the temperature of the electrochemical hydrogen pump 100 decreases with channel of time and thereby water vapor in hydrogen-containing gas on the anode AN is condensed during operation of the pump 5 for circulating anode off-gas through the circulating path 4 when operation of the electrochemical hydrogen pump 100 is stopped. Since a decrease in pressure occurs due to a decrease in gas molecule molar quantity of hydrogen-containing gas present in the circulating path 4, there is a possibility that the pressure in the circulating path 4 becomes negative. This allows air to infiltrate from an outside into the circulating path 4, thereby leading to a risk of degradation of cells of the electrochemical hydrogen pump 100.

In view of this, the hydrogen system 200 according to the present embodiment can keep the pressure in the circulating path 4 from becoming negative by introducing hydrogen-containing gas into the circulating path 4 from the anode gas supply channel 1 on an upstream side relative to a position at which the recycle channel 2 merges by using the flow amount regulator 10 so as to compensate for the decrease in pressure of the hydrogen-containing gas in the circulating path 4.

As is easily understood from a curve of a saturated water vapor amount in hydrogen-containing gas correlated to a temperature of the hydrogen-containing gas, an amount of water condensed from water vapor in the hydrogen-containing gas decreases as the temperature of the hydrogen-containing gas decreases with channel of time. Therefore, the hydrogen system 200 according to the present embodiment can introduce an appropriate amount of hydrogen-containing gas to the circulating path 4 from an upstream side of the anode gas supply channel 1 by gradually decreasing a flow amount of the hydrogen-containing gas and pump output with channel of time.

The hydrogen system 200 according to the present embodiment may be similar to the hydrogen system 200 according to any of the first embodiment, the modification of the first embodiment, the second embodiment, the third embodiment, and the fourth embodiment except for the above feature.

### (Modification)

A hydrogen system 200 according to the present modification is similar to the hydrogen system 200 according to the fifth embodiment except for contents of control of a flow amount regulator 10 and a pump 5 by a controller 50 described below.

In a case where operation of an electrochemical hydrogen pump 100 stops due to occurrence of an abnormality and it is impossible to supply hydrogen-containing gas from a hydrogen-containing gas supply source, the controller 50 stops the pump 5 after gradually decreasing output of the pump 5 without controlling the flow amount regulator 10.

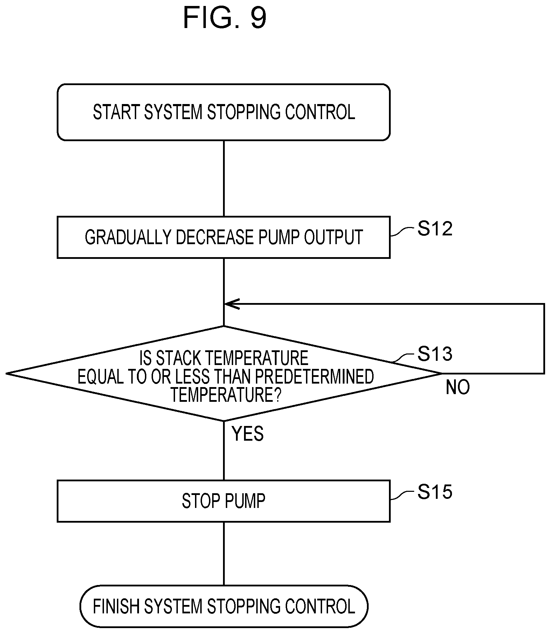

Fig. 9 is a flowchart illustrating an example of operation of a hydrogen system according to a modification of the fifth embodiment. The operation illustrated in Fig. 9 may be performed, for example, when an arithmetic circuit of the controller 50 reads out a control program from a memory circuit of the controller 50. Note, however, that it is not essential that this operation is performed by the controller 50. An operator may perform part of the operation. Note that control for stopping the system due to power outage can be performed by operation similar to the operation of the hydrogen system 200 according to the fifth embodiment (Fig. 8), for example, by using an uninterruptible power-supply system (UPS) as a backup power source.

First, when control for stopping the hydrogen system 200 starts, a voltage applied across an anode AN and a cathode CA by a voltage application unit 21 is decreased. For example, the voltage applied across the anode AN and the cathode CA may be set to zero volt.

Next, in step S12, the pump 5 is controlled to gradually decrease pump output with channel of time.

Next, in step S13, it is determined whether or not a stack temperature of the electrochemical hydrogen pump 100 is equal to or less than a predetermined temperature. The "predetermined temperature" in step S13 can be, for example, approximately 30°C but is not limited to this.

In a case where the stack temperature of the electrochemical hydrogen pump 100 is higher than the predetermined temperature ("No" in step S13), the current state is maintained.

In a case where the stack temperature of the electrochemical hydrogen pump 100 becomes equal to or less than the predetermined temperature ("Yes" in step S13), the processing proceeds to a next step. In step S15, the pump 5 is controlled so as to stop pump output. By thus omitting the operation in step S11 and the operation in step S14 in Fig. 8, control for stopping the hydrogen system 200 upon occurrence of an abnormality is performed.

The hydrogen system 200 according to the present modification configured as above can properly perform system stopping control in a case where it is impossible to supply hydrogen-containing gas due to an abnormality of a hydrogen-containing gas supply source.

The hydrogen system 200 according to the present embodiment may be similar to the hydrogen system 200 according to any of the first embodiment, the modification of the first embodiment, the second embodiment, the third embodiment, the fourth embodiment, and the fifth embodiment except for the above feature.

The first embodiment, the modification of the first embodiment, the second embodiment, the third embodiment, the fourth embodiment, the fifth embodiment, and the modification of the fifth embodiment may be combined with each other unless inconsistency occurs.

A lot of modifications and other embodiments of the present disclosure are apparent from the above description for a person skilled in the art. The above description should be interpreted as being illustrative only and has been provided for the purpose of teaching a person skilled in the art the best mode for carrying out the present disclosure. Details of the structure and/or the functions of the present disclosure may be substantially changed without departing from the spirit of the present disclosure.

### Industrial Applicability

An aspect of the present disclosure can be used for a hydrogen system that can keep a decline in efficiency of hydrogen compression operation at reboot smaller than conventional arts.

### Reference Signs List

1 anode gas supply channel
2 recycle channel
2A position
3 drainage channel
3A drainage channel
3B drainage channel
4 circulating path
5 pump
5A pump
5B pump
6 gas-liquid separator
6A water storage
7 condenser
8 cooler
10 flow amount regulator
13 drainage channel
15 pump
20 electrolyte membrane
21 voltage application unit
50 controller
100 electrochemical hydrogen pump
200 hydrogen system
AN anode
CA cathode

## Claims

1. A hydrogen system comprising:
a compressor that causes hydrogen in hydrogen-containing gas supplied to an anode to move to a cathode and produces compressed hydrogen by applying a voltage across the anode and the cathode disposed with an electrolyte membrane interposed therebetween;
an anode gas supply channel through which the hydrogen-containing gas to be supplied to the anode flows;
a recycle channel through which anode off-gas that is discharged from the anode and then merges with the anode gas supply channel flows;
a drainage channel that is provided at a position of the recycle channel or at a position of the anode gas supply channel on a downstream side relative to a position at which the recycle channel merges and is for draining liquid water out of the recycle channel or out of the anode gas supply channel;
a pump that is provided in the recycle channel or in the anode gas supply channel on the downstream side relative to the position at which the recycle channel merges; and
a controller that causes the pump to operate in a state where the applied voltage has been decreased when operation of the compressor is stopped.

2. The hydrogen system according to Claim 1, wherein
a gas-liquid separator is provided in the recycle channel or in the anode gas supply channel on the downstream side relative to the position at which the recycle channel merges, and the drainage channel is connected to a water storage part of the gas-liquid separator.

3. The hydrogen system according to Claim 1 or 2, wherein
the pump is a hydrogen purifier that is provided in the anode gas supply channel on the downstream side relative to the position at which the recycle channel merges and that causes hydrogen in hydrogen-containing gas supplied to the anode to move to the cathode and generates purified hydrogen by applying a voltage across the anode and the cathode disposed with an electrolyte membrane interposed therebetween.

4. The hydrogen system according to any one of Claims 1 through 3, further comprising a cooler that cools the compressor,
wherein the controller causes the pump to operate and causes the cooler to cool the compressor.

5. The hydrogen system according to any one of Claims 1 through 4, further comprising a condenser provided in the recycle channel or in the anode gas supply channel on the downstream side relative to the position at which the recycle channel merges.

6. The hydrogen system according to any one of Claims 1 through 5, further comprising a flow amount regulator that regulates a flow amount of the hydrogen-containing gas in the anode gas supply channel on an upstream side relative to the position at which the recycle channel merges,
wherein the controller gradually decreases the flow amount of the hydrogen-containing gas by controlling the flow amount regulator and gradually decreases output of the pump during operation of the pump and then stops the pump.

7. The hydrogen system according to Claim 6, wherein
in a case where in stopping operation of the compressor due to occurrence of an abnormality and it is impossible to supply hydrogen-containing gas from a hydrogen-containing gas supply source, the controller stops the pump after gradually decreasing output of the pump without controlling the flow amount regulator.
